# EUROPÄISCHE PATENTANMELDUNG

(11) **EP 0 937 660 A2**
(43) Veröffentlichungstag der Anmeldung: **25.08.1999**
(21) Anmeldenummer: 99810143.0
(22) Anmeldetag: 17.02.1999
(51) Int. Cl.: B65G 1/04

(54) **Vorrichtung zum Ein- und Auslagern von Behältern oder Paletten eines Regals**

(30) Priorität: 23.02.1998 CH 43098
(71) Anmelder: Manitec Consulting AG, 6048 Horw (CH)
(72) Erfinder: Koller, Hans, 6048 Horw (CH); Mathys, André, 6372 Ennetmoos (CH)
(74) Vertreter: Groner, Manfred

(57) **Zusammenfassung**

Die Vorrichtung weist einen Greifer (1) auf, der in einem Magazin (3) gelagert ist und zwei Enden (A, B) besitzt. Diese Enden sind wählbar mittels eines Antriebs (4, 4') geführt aus- und einfahrbar, wobei jeweils eine Oberfläche (13, 14) zum Einschieben und eine Oberfläche (14, 13) zum Ausziehen eines Behälters (24) aufweist. Beispielsweise weisen die genannten Oberflächen (13, 14) zur Transportrichtung geneigte Borsten (22, 23) auf. Die Vorrichtung zeichnet sich insbesondere durch eine geringe Raumhöhe und eine grosse Greiftiefe aus.

## Beschreibung

Die Erfindung betrifft eine Vorrichtung zum Ein- und Auslagern von Behältern oder Paletten eines Regals. Solche Vorrichtungen sind in der Lagertechnik bekannt. Diese sind jedoch sehr aufwendig und teuer und auch platzraubend. Insbesondere ist bei diesen Vorrichtungen die Bauhöhe ungünstig hoch und zudem ist die Greiftiefe sehr beschränkt.

Der Erfindung liegt die Aufgabe zugrunde, eine Vorrichtung der genannten Art zu schaffen, die wesentlich einfacher und kostengünstiger und zudem mit einer wesentlich geringeren Bauhöhe herstellbar ist.

Die Aufgabe ist gelöst durch einen Greifer, der in einem Magazin gelagert ist und zwei teppichartige Enden aufweist, die wählbar mittels eines Antriebs geführt aus- und einfahrbar sind, wobei die beiden Enden jeweils eine Oberfläche zum Einschieben eines Behälters und eine Oberfläche zum Ausziehen eines Behälters aufweisen. Bei der erfindungsgemässen Vorrichtung lassen sich die beiden teppichartigen Enden jeweils unter den zu transportierenden Behälter schieben. Mit der einen Oberfläche wird der Behälter eingeschoben und mit der anderen Oberfläche ausgezogen. Solche teppichartige Enden lassen sich mit sehr kleiner Bauhöhe herstellen. Ein wesentlicher Vorteil der erfindungsgemässen Vorrichtung wird auch darin gesehen, dass der Antrieb des Greifers in einem Regalbediengerät untergebracht werden kann und dass dann im Regal nur passive Elemente, insbesondere Führungen untergebracht werden müssen.

Ist der Greifer als Kette ausgebildet, so kann er um mehrere Umlenkrollen sehr raumsparend im Magazin untergebracht werden. Mit einem solchen Greifer ist es möglich, sehr tief in einen Kanal einzugreifen, beispielsweise bis fünf Meter. Ein solches Magazin kann sehr einfach auf einem Regalbediengerät angeordnet werden.

Ist nach einer Weiterbildung der Erfindung eine Weiche vorgesehen, mit welcher die beiden Enden jeweils wahlweise zum Ein- oder Auslagern in unterschiedliche Richtungen ausfahrbar sind, so können beide Regalseiten mit dem gleichen Greifer bedient werden. Somit können mit dem gleichen Greifer auf beiden Regalseiten Behälter ein- und ausgezogen werden. Ein wesentlicher Vorteil der erfindungsgemässen Vorrichtung wird auch darin gesehen, dass der Greifer für verschiedene Kanaltiefen leicht anpassbar ist und dass gleichzeitig mehrere Behälter transportiert werden können.

Die erfindungsgemässe Vorrichtung lässt sich zudem auch zum Ein- und Auslagern von Paletten verwenden.

Weitere vorteilhafte Merkmale ergeben sich aus den abhängigen Patentansprüchen, der nachfolgenden Beschreibung sowie der Zeichnung.

Ausfuhrungsbeispiele der Erfindung werden nachfolgend anhand der Zeichnung näher erläutert. Es zeigen:
Figur 1 schematisch eine erfindungsgemässe Vorrichtung,
Figuren 2 bis 5 schematisch die Wirkungsweise der erfindungsgemässen Vorrichtung nach Figur 1,
Figuren 6 und 7 schematisch den Transport eines Behälters mittels der erfindungsgemässen Vorrichtung,
Figur 8 schematisch die Verwendung der erfindungsgemässen Vorrichtung für den Transport von Paletten,
Figuren 9 bis 11 schematisch unterschiedliche Ausführungen von Greiferenden, und
Figur 12 schematisch das Ein- und Auslagern von Behältern der beiden Seiten eines Regals.

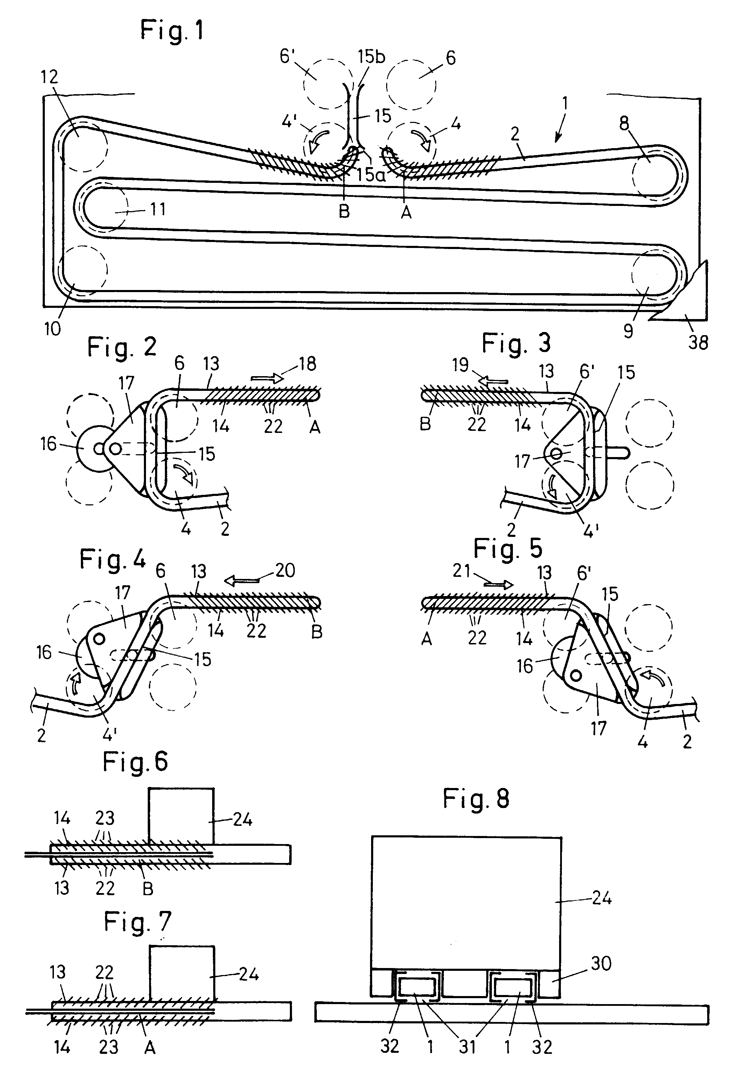

Die Figur 1 zeigt einen Greifer 1, der in einem hier lediglich angedeuteten Magazin 3 eines Regalbediengerätes 38 angeordnet ist. Der Greifer 1 besteht aus einer beweglichen Kette 2, beispielsweise eine Gliederkette, die wie ersichtlich um mehrere Umlenkrollen 8 bis 12 gelegt ist und die an den beiden Enden A und B jeweils mit einem Antriebsritzel 4 bzw. 4' in Eingriff ist. Das Ritzel 4 ist abhängig vom Ritzel 4' in Richtung des Pfeils 40 mit einem hier nicht gezeigten Antrieb drehbar. Das Ritzel 4' ist in Richtung des Pfeils 39 im Gegenuhrzeigersinn angetrieben. Über den beiden Antriebsritzeln 4' und 4 befindet sich jeweils eine Umlenkrolle 6' bzw. 6.

In der Figur 1 befindet sich der Greifer 1 in der Ausgangsposition. Die beiden Enden A und B sind wie ersichtlich spiegelbildlich ausgebildet und angeordnet und besitzen jeweils eine erste Oberfläche 13 und eine gegenüberliegende zweite Oberfläche 14. Die beiden Enden A und B sind teppichartig ausgebildet. Die beiden Seiten 13 und 14 bestehen bei dem in den Figuren 1 bis 7 gezeigten Ausführungsbeispiel aus Borsten 22 und 23 (Figuren 6 und 7). Diese Borsten 22 und 23 sind zur Transportrichtung hin geneigt und zwar unterschiedlich, wie die Figuren 6 und 7 zeigen. Bei dem in Figur 6 gezeigten Ende B sind die Borsten 23 der zweiten Oberfläche 14 nach links geneigt, während die hier nicht aktiven Borsten 22 der ersten Oberfläche 13 nach rechts geneigt sind. Wird nun in Figur 6 das Ende B nach links bewegt, so nehmen die Borsten 23 den Behälter 24 durch einen Reibschluss mit. Wird das Ende B jedoch in Figur 6 nach rechts verschoben, so gleiten die Borsten 23 unter den Behälter 24 mit vergleichsweise geringer Reibung weg. Der Behälter 24 wird in diesem Fall nicht transportiert. Die beiden Enden A und B können mittels einer Weiche 15 jeweils wahlweise auf die eine oder andere Seite gelenkt werden, wie dies nachfolgend anhand der Figuren 2 bis 5 näher erläutert wird.

Die Weiche 15 ist mittels einer Stellvorrichtung 16 und 17 zwischen vier Stellungen umstellbar. Die Weiche 15 besitzt gemäss Figur 3 eine Einführöffnung 15a sowie einen Ausgang 15b. In der Stellung nach Figur 2 wird das Ende A des Greifers 1 in Richtung des Pfeils 18 ausgefahren. Das Ritzel 4 wird hierbei im Uhrzeigersinn angetrieben. Die Borsten 22 der ersten Oberfläche 13 sind wie in Figur 2 gezeigt nach rechts gerichtet. Wird nun das Ende A gemäss Figur 7 unter einen Behälter 24 geschoben, so wird dieser Behälter 24 in Richtung des Pfeils 18 in ein hier nicht näher gezeigtes Regal eingelagert. Wird das Ende A nun durch eine Drehung des Ritzels 4 im Gegenuhrzeigersinn zurückgezogen, so gleiten die Borsten 22 im wesentlichen ohne Reibschluss unter dem Behälter 24 weg. Der Behälter wird somit in Gegenrichtung des Pfeils 18 durch das Ende A nicht transportiert.

Um einen Behälter 24 der linken Regalhälfte einzulagern, wird das Ende B gemäss Figur 3 nach links ausgelagert. Die Weiche 15 ist hierbei nach links gestellt. Das Ritzel 4' wird im Gegenuhrzeigersinn angetrieben. Ein Behälter 24 der linken Regalseite wird durch die Oberfläche 13 in Richtung des Pfeils 19 transportiert.

Das Auslagern eines Behälters erfolgt gemäss den Figuren 4 und 5. Die Weiche 15 ist dazu derart schräggestellt, dass die Enden A und B diagonal ausgefahren werden. Zum Auslagern eines Behälters 24 der rechten Regalseite wird gemäss Figur 4 das Ende B durch eine Drehung des Antriebsritzels 4' im Gegenuhrzeigersinn ausgefahren. Der Greifer 1 ist wie ersichtlich um das Antriebsritzel 4' und die Umlenkrolle 6 gelegt. Zum Auslagern wird nun das Ende B in Richtung des Pfeils 20 zurückgezogen, indem das Antriebsritzel 4' im Uhrzeigersinn angetrieben wird. Das Ende B wird somit mit der Oberfläche 14 im wesentlichen ohne Reibungswiderstand unter den Behälter 24 geschoben und anschliessend in Gegenrichtung des Pfeils 20 zurückgezogen. Durch die Neigung der Borsten 23 in Richtung des Pfeils 20 entsteht hierbei eine reibschlüssige Verbindung zwischen dem Ende B und dem Behälter 24.

Die Figur 5 zeigt das Auslagern eines Behälters 24 der linken Regalseite. Die Weiche 15 ist bezüglich der Figur 4 in die andere Richtung geneigt. Der Greifer 1 ist entsprechend mit dem Antriebsritzel und der Umlenkrolle 6' in Eingriff.

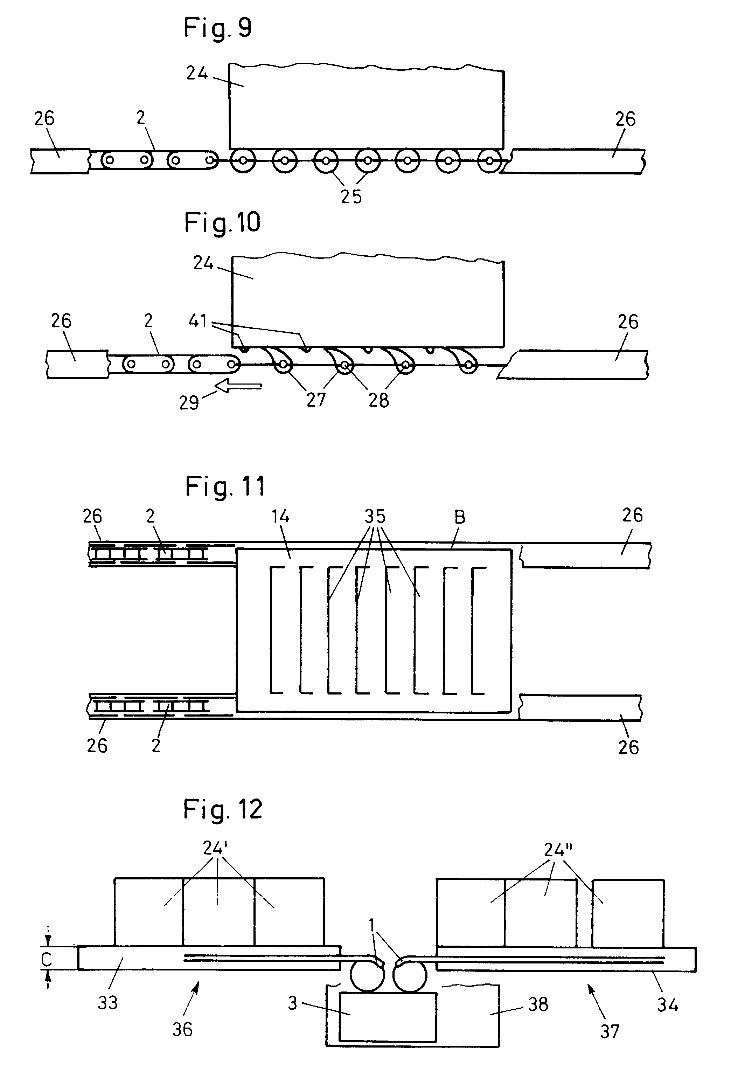

Die Oberseiten 13 und 14 sind gemäss den Ausführungen nach den Figuren 1 bis 7 als Borsten 22 bzw. 23 ausgebildet. Diese Borsten 22 und 23 bilden Mittel, welche das Ende A bzw. B reibschlüssig mit dem Behälter verbinden. Denkbar sind aber auch andere reibschlüssige oder formschlüssige Mittel, wie beispielsweise die Figuren 9 bis 11 zeigen.

Bei der Ausführung gemäss Figur 9 weisen die Enden A und B mehrere in einer Reihe gelagerte Rollen 25 auf, die jeweils eine Rücklaufsperre besitzen. Diese Rollen 25 sind am Ende einer Kette 2 angebracht, die steif in einer Führungsschiene 26 geführt ist.

Bei der Ausführung gemäss Figur 10 weisen die Enden A bzw. B jeweils mehrere in einer Reihe angeordnete mechanische Sperrklinken 27 auf. Diese sind jeweils um eine Achse 28 schwenkbar. An der Unterseite des Behälters 24 sind Mitnehmernocken 41 angebracht. Wird nun die Kette 2 in Figur 10 in Richtung des Pfeils 29 nach links gezogen, so greifen die Sperrklinken 27 an den Mitnehmernocken 41 an, und heben den Behälter 24 etwas an und transportieren ihn entsprechend den Behälter 24 in Richtung des Pfeils 29. Werden die Sperrklinken 27 jedoch in Gegenrichtung des Pfeils 29 gestossen, so gleiten die Sperrklinken 27 ohne Eingriff an der Unterseite 24 an den Mitnehmernocken 41 vorbei. Die Sperrklinken 24 wirken somit ähnlich wie geneigte Borsten.

Bei der Ausführung gemäss Figur 11 ist ein Ende B in Draufsicht gezeigt. Dieses Ende B wird mit zwei Ketten 2 in parallelen Führungsschienen 26 gezogen bzw. gestossen. Die hier sichtbare zweite Oberfläche 14 weist mehrere hintereinander angeordnete Lamellen 35 auf, die schräggestellt sind und sich in Arbeitsrichtung an der Unterseite des Behälters 24 verklemmen. In der Leerlaufrichtung, d.h. in diesem Fall in Figur 11 nach rechts, werden diese Lamellen 35 nach rechts umgelegt und gleiten ohne wesentliche Krafteinwirkung am Behälter 24 vorbei.

Die Figur 12 zeigt schematisch zwei Regalseiten 36 und 37 mit jeweils mehreren Behältern 24' bzw. 24". Zwischen diesen beiden Regalseiten 36 und 37 ist das Regalbediengerät 38 angeordnet. Die Behälter 24' und 24" befinden sich jeweils über einem Kanal 33 bzw. 34, in denen die Führungsschienen 26 angeordnet sind. Wird der Greifer 1 in den Kanal 33 eingeschoben, so lassen sich beispielsweise zwei Behälter 24' in die linke Regalseite einschieben. Mit einem Einfahren des Greifers 1 in den rechten Kanal 34 können drei Behälter 24" aus der rechten Regalseite ausgelagert werden. Die in Figur 12 eingezeichnete Höhe C der Kanäle 33 und 34 ist sehr niedrig und beträgt beispielsweise 20 mm.

## Patentansprüche

1. Vorrichtung zum Ein- und Auslagern von Behältern (24) oder Paletten eines Regals (36, 37), gekennzeichnet durch einen Greifer (1), der in einem Magazin (3) gelagert ist und zwei Enden (A, B) aufweist, die wählbar mittels eines Antriebs (4, 4') geführt aus- und einfahrbar sind, wobei die beiden Enden (A, B) jeweils eine Oberfläche (13, 14) zum Einschieben und eine Oberfläche (14, 13) zum Ausziehen eines Behälters (24) aufweisen.

2. Vorrichtung nach Anspruch 1, dadurch gekennzeichnet, dass die genannten Oberflächen (13, 14) zur Transportrichtung geneigte Borsten (22, 23) aufweisen.

3. Vorrichtung nach Anspruch 1, dadurch gekennzeichnet, dass die Oberflächen (13, 14) Klinken (27) aufweisen, die den zu transportierenden Behälter (24) form- oder kraftschlüssig festhalten und gleichzeitig anheben.

4. Vorrichtung nach Anspruch 1, dadurch gekennzeichnet, dass die Oberflächen (13, 14) Rollen (25) mit Rücklaufsperren aufweisen.

5. Vorrichtung nach Anspruch 1, dadurch gekennzeichnet, dass die Behälter (24) auf ihrer Unterseite (24') Mitnehmernocken (40") aufweisen.

6. Vorrichtung nach Anspruch 1, dadurch gekennzeichnet, dass die Oberflächen (13, 14) zur Transportrichtung geneigte Lamellen (35) aufweisen, die vorzugsweise Gummiprofile für einen Reibschluss aufweisen.

7. Vorrichtung nach einem der Ansprüche 1 bis 6, dadurch gekennzeichnet, dass wenigstens die beiden Enden (A, B) jeweils als Teppich ausgebildet sind.

8. Vorrichtung nach einem der Ansprüche 1 bis 7, dadurch gekennzeichnet, dass der Greifer (1) als Kette ausgebildet ist.

9. Vorrichtung nach einem der Ansprüche 1 bis 8, dadurch gekennzeichnet, dass die beiden Enden (A, B) mittels einer Weiche (15) wahlweise zum Ein- oder Auslagern in unterschiedliche Richtungen ausfahrbar sind.

10. Vorrichtung nach Anspruch 8 oder 9, dadurch gekennzeichnet, dass die Kette (2) eine stossende Kette ist oder steif geführt ist.

11. Vorrichtung nach einem der Ansprüche 1 bis 10, dadurch gekennzeichnet, dass der Greifer (1) in einem Magazin (3) eines Regalbediengerätes (38) untergebracht ist.

12. Vorrichtung nach einem der Ansprüche 1 bis 11, dadurch gekennzeichnet, dass die beiden Oberflächen (13, 14) der Enden (A, B) jeweils gegenüberliegend angeordnet sind.
